# EUROPEAN PATENT APPLICATION

(11) **EP 3 933 114 A1**
(43) Date of publication of application: **05.01.2022**
(21) Application number: 20762752.2
(22) Date of filing: 19.02.2020
(51) Int. Cl.: E02D 25/00, E02D 15/00

(54) **CONSTRUCTION METHOD FOR UNDERWATER CONCRETE BLOCK STRUCTURE**

(30) Priority: 28.02.2019 KR 20190024109
(71) Applicant: Yujoo Co., Ltd., Gijang-gun, Busan 46073 (KR)
(72) Inventor: KIM, Sang Gi, Busan 47148 (KR)
(74) Representative: Hoefer & Partner Patentanwälte mbB
(86) International application number: PCT/KR2020/002356
(87) International publication number: WO 2020/175844

(57) **Abstract**

A method of constructing an underwater concrete block structure includes assembling a plurality of concrete blocks into a concrete block assembly, forming a drilled borehole in the underwater ground under a concrete hole of the concrete block assembly, and forming a concrete column in the concrete hole and the drilled borehole, thereby greatly increasing the stability of the underwater concrete block structure.

## Description

### Technical Field

The present invention relates to a construction method of an underwater concrete block structure installed at sea or in a river for various purposes such as docks for a port, coastal wave absorbing revetment or breakwater, etc.

### Background Art

Generally, an underwater concrete block structure, such as docks for a port, coastal wave absorbing revetment or breakwater, etc., is installed underwater for various purposes. The underwater structure refers to a structure that is installed underwater so that the upper portion thereof is located above or below the water surface.

A widely known construction technique for the construction of underwater structures is the large caisson method. While the large caisson method has the advantage of being able to withstand big waves, the large caisson method also has the disadvantage of requiring high costs for transportation and construction and having various constraints, since a very large caisson structure needs to be fabricated on land, transported to the installation point, and installed in the water.

In order to solve the problem of such a large caisson method, a method of forming an underwater structure by stacking small concrete blocks in multiple stages according to the water depth is known.

The inventor's Korean Patent No. 10-1355805 (registered on January 15, 2014) entitled "Underwater Concrete Block Structure and Construction Method thereof" discloses a technique in which an upper concrete block and a lower concrete block are bound together in a structural integrity by concrete columns, thereby having sufficient structural stability even in the waves caused by large typhoons.

On the other hand, the stability of an underwater structure, such as a big caisson, is generally determined by the weight and the frictional force (that is, the ground contact area and the friction coefficient with the foundation ground) of the underwater structure.

This stability determination method is based on the premise that the underwater structure is simply loaded on the foundation ground.

Therefore, even when the underwater structure is an integrated structure composed of a plurality of concrete blocks, the stability of the underwater structure is determined only by the weight and the frictional force of the underwater structure.

Even under such situations, a problem still exists in that even though the underwater structure is an integrated structure composed of a plurality of concrete blocks, such an underwater structure needs to be constructed with the same size as a big caisson.

Meanwhile, the inventor's another Korean Patent Application Publication No. 10-2019-0010203 (published on January 30, 2019) entitled "Concrete Pack Insertion Device, Method of Concrete Block Structure Construction Using Same, and Concrete Block Structure Constructed Using Same" discloses a technique in which a concrete pack is prepared by inserting, in a sealed manner, a reinforcing member extending in the vertical direction and fresh concrete into a waterproof membrane, the concrete pack is inserted into a vertical hollow tube, which is in turn inserted into a vertical hole of a concrete block stack, and the tube is removed from the vertical hole with the concrete pack left in the vertical hole.

Here, the tube is inserted into the vertical hole of the concrete block stack together with the concrete pack in order to conveniently insert the concrete pack, so the tube does not contribute to a drilling operation.

On the other hand, Korean Patent No. 10-1650231 (registered on August 16, 2016) entitled "Semi-permeable Breakwater Structure with Wave-power Generator" discloses a technique in which while after an embedded steel pipe is driven into the ground while being inserted into a guide steel pipe of lower footing, a drilled borehole is excavated to a predetermined depth in the embedded steel pipe by an RCD bit, a reinforcing rebar member is placed into the embedded steel pipe and fresh concrete is poured thereto to form a cast-in-place pile integrated with the embedded steel pipe, and various concrete blocks are to be installed using the cast-in-place piles.

Here, since the cast-in-place pile is an integrated structure composed of the embedded steel pipe, and the rebar cage and the fresh concrete, which are inserted into the embedded steel pipe, the embedded steel pipe cannot be removed. In other words, this conventional method has a problem in that the construction cost or the like increases greatly since the embedded steel pipe cannot be reused.

In addition, this conventional method has another problem in that although a variety of concrete blocks are installed using the cast-in-place piles, the concrete blocks and the cast-in-place piles are simply assembled so they are not completely integrated together, thereby having structural vulnerability over time.

In addition, this conventional method has a further problem in that although the embedded steel pipe is driven into the underwater ground while being inserted into the guide steel pipe, since there is no structure capable of guiding the upper portion of the embedded steel pipe, it is very difficult to drive the embedded steel pipe into the underwater ground in the vertical direction.

In addition, it is very difficult to install the concrete blocks if the verticality of the embedded steel pipe is not precise.

### Disclosure

### Technical Problem

Accordingly, the present invention has been made keeping in mind the above problems occurring in the related art, and an objective of the present invention is to provide a novel method of constructing an underwater concrete block structure by forming a concrete block assembly using a plurality of concrete blocks, forming a drilled borehole in the ground under a concrete hole of the concrete block assembly, and forming a concrete column in the concrete hole and the drilled borehole, thereby greatly increasing the stability of the underwater concrete block structure, and an underwater concrete block structure obtained using the method.

### Technical Solution

In order to achieve the above and other objectives, there is provided a method of constructing an underwater concrete block structure, the method including: fabricating a plurality of concrete blocks each having a vertical hole extending in a vertical direction: continuously arranging the plurality of concrete blocks on the underwater ground in a horizontal direction to form a concrete block assembly, whereby the vertical hole of the concrete block is formed into a concrete hole in which an upper end thereof is opened while a lower end thereof is blocked by the underwater ground; after the concrete block assembly is formed, drilling the underwater ground under the concrete hole to form a drilled borehole in line with the concrete hole; and after the drilled borehole is formed, forming a concrete column through the concrete hole and the drilled borehole, wherein an upper surface of the concrete block assembly is located above the water surface, so that the drilled borehole is formed in a dry operation by a drilling equipment placed on the upper surface of the concrete block assembly.

The concrete column may be formed by inserting a vertical reinforcing member extending in a vertical direction and a waterproof membrane wrapping lower and lateral sides of the vertical reinforcing member into the concrete hole and the drilled borehole, and pouring fresh concrete into the waterproof membrane.

A protection pipe, extending in a vertical direction, may be inserted into the underwater ground through the concrete hole while drilling the underwater ground to form the drilled borehole, wherein after the protection pipe is inserted, the protection pipe is positioned over the concrete hole and the drilled borehole such that the drilled borehole is formed inside of the protection pipe.

The concrete column may be formed by inserting a vertical reinforcing member extending in a vertical direction and a waterproof membrane wrapping lower and lateral sides of the vertical reinforcing member into the protection pipe, pouring fresh concrete into the waterproof membrane, and removing the protection pipe before the poured fresh concrete is cured so that the waterproof membrane is in close contact with the concrete block assembly and the underwater ground under the pressure of the poured fresh concrete.

The protection pipe may be removed after the drilled borehole is formed.

The concrete block assembly may be formed by continuously arranging the plurality of concrete blocks in vertical and horizontal directions, whereby the vertical holes of the concrete blocks continuously stacked in the vertical direction are continuously connected in a vertical direction to form the concrete hole in which the upper end thereof is opened while the lower end thereof is blocked by the underwater ground.

The underwater ground may include an artificially formed foundation ground, wherein the foundation ground is formed before the concrete block assembly is formed, wherein the foundation ground is any of foundation ripraps, substituted ripraps, deep mixed consolidation ground, improved soft ground, and a combination thereof.

After the concrete column is formed, a cap concrete part may be further formed on the concrete block assembly.

The concrete block may have a filling space therein, wherein after the concrete block assembly is formed, a filling material is further filled in the filling space.

The concrete block may include an upper concrete plate, a lower concrete plate spaced apart from the upper concrete plate, and a vertical connection pipe connecting the upper and lower concrete plates, wherein upper and lower parts of the vertical connection pipe are respectively connected to the upper and lower concrete plates so that a middle part of the vertical connection pipe is exposed to the outside between the upper and lower concrete plates.

### Advantageous Effects

According to the underwater concrete block structure construction method, the stability of the underwater concrete block structure can be greatly increased by constructing the underwater concrete block structure by assembling the plurality of concrete blocks into the concrete block assembly, forming the drilled borehole in the ground under the concrete column-insertion hole of the concrete block assembly, and forming the concrete column in the concrete column-insertion hole and the drilled borehole.

Accordingly, the plurality of concrete blocks constituting the concrete block assembly is bound to the underwater ground by the concrete columns, thereby greatly improving the stability of the underwater concrete block structure.

In addition, as a result of the improved stability, it is possible to significantly miniaturize the underwater concrete block structure compared to the conventional big caisson method or the like.

This is because even when the weight of the underwater concrete block structure and the frictional force of the underwater concrete block structure against the underwater ground are reduced, the binding force to the underwater ground by the concrete columns can compensate for the reduction, thereby providing sufficient stability.

### Description of Drawings

FIG. 1 is a perspective view of a concrete block used in a method of constructing an underwater concrete block structure according to a first embodiment of the present invention;
FIG. 2 is a conceptual plan view illustrating a concrete block assembly formed on the underwater ground by installing the concrete blocks of FIG. 1;
FIG. 3 is a cross-sectional conceptual view of FIG. 2;
FIG. 4 is a view illustrating a state in which a drilled borehole is formed after the concrete block assembly of FIG. 3 is formed;
FIGS. 5 to 8 are views illustrating a procedure of sequentially forming a concrete column after the formation of the drilled borehole illustrated in FIG. 4;
FIG. 9 is a cross-sectional view illustrating the concrete block used in the construction method of the underwater concrete block structure according to a second embodiment of the present invention;
FIG. 10 is a perspective view illustrating the concrete block of FIG. 9;
FIG. 11 is a view illustrating a state in which a concrete block assembly is formed on the underwater ground by installing the concrete blocks of FIG. 9;
FIG. 12 is a view illustrating a state in which a drilled borehole is formed after the concrete block assembly of FIG. 11 is formed;
FIGS. 13 to 16 are views illustrating a procedure of sequentially forming a concrete column after the formation of the drilled borehole illustrated in FIG. 12;
FIG. 17 is a cross-sectional view illustrating an underwater concrete block structure constructed according to a third embodiment of the present invention;
FIG. 18 is an exploded view illustrating a plurality of concrete blocks used in constructing the underwater concrete block structure of FIG. 17;
FIG. 19 is a cross-sectional view illustrating an underwater concrete block structure constructed according to a fourth embodiment of the present invention;
FIG. 20 is a perspective view illustrating a concrete block used in a construction method of an underwater concrete block structure according to a fifth embodiment of the present invention;
FIG. 21 is a cross-sectional view illustrating the concrete block of FIG. 21; and
FIG. 22 is a cross-sectional view illustrating the underwater concrete block structure constructed according to the fifth embodiment of the present invention.

### Mode for Invention

Hereinbelow, exemplary embodiments of the present invention will be described in detail with reference to the accompanying drawings to allow those skilled in the art to easily implement the embodiments. However, the present invention is not limited to those embodiments, but may be implemented into other forms. In the drawings, parts irrelevant to the description are omitted for simplicity of explanation, and like reference numerals designate like parts throughout the specification.

Throughout the specification, the expression describing that an element "includes" a component means that the element may further include other configurations unless the context clearly indicates otherwise.

A construction method of an underwater concrete block structure according to a first embodiment will be described.

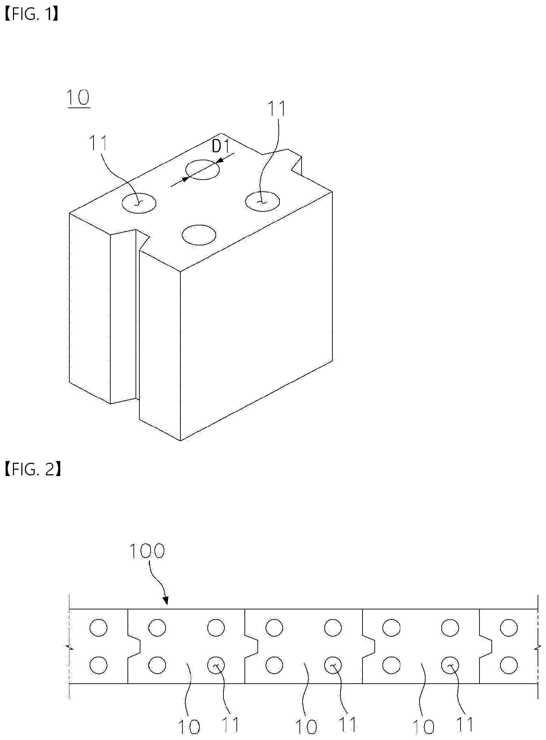

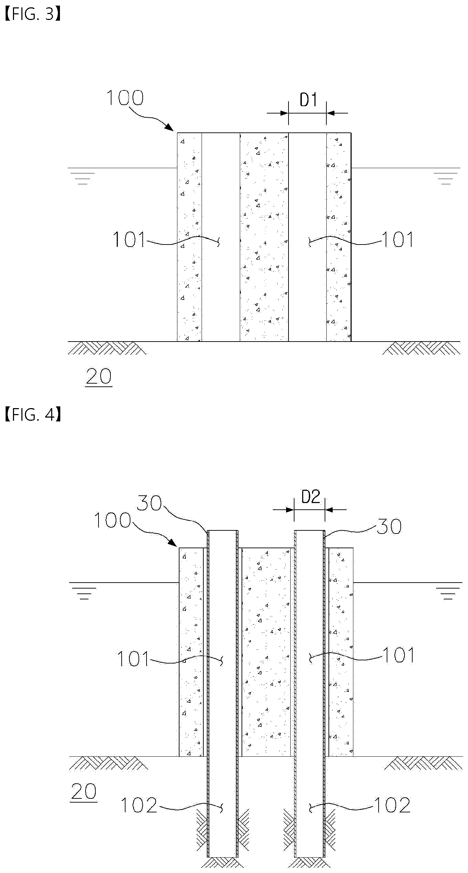

FIG. 1 is a perspective view of a concrete block used in a method of constructing an underwater concrete block structure according to a first embodiment of the present invention, FIG. 2 is a conceptual plan view illustrating a concrete block assembly formed on the underwater ground by installing the concrete blocks of FIG. 1, FIG. 3 is a cross-sectional conceptual view of FIG. 2,

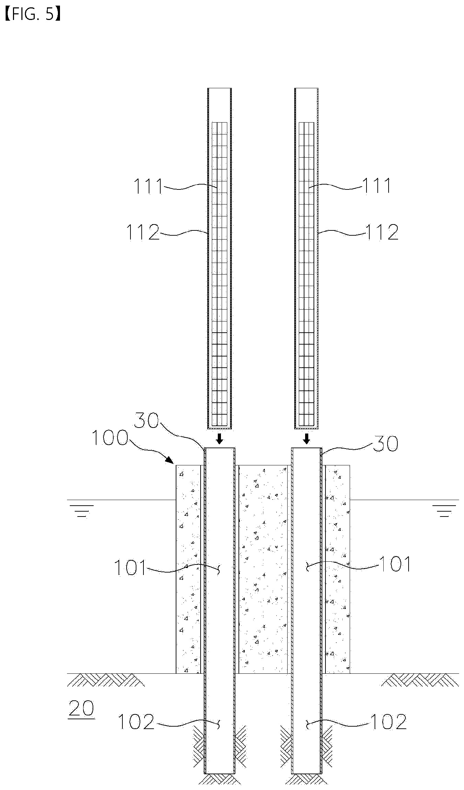

FIG. 4 is a view illustrating a state in which a drilled borehole is formed after the concrete block assembly of FIG. 3 is formed, and FIGS. 5 to 8 are views illustrating a procedure of sequentially forming a concrete column after the formation of the drilled borehole illustrated in FIG. 4.

### (1) Fabrication of Concrete Block

A concrete block 10 as illustrated in FIG. 1 is fabricated.

Although the concrete block 10 may have a variety of shapes, the concrete block preferably has two or more vertical holes 11 extending at least in the vertical direction.

The vertical hole 11 extends in the vertical direction with a first diameter D1.

According to an embodiment, the concrete block 10 may be provided with a space for filling, or a space or a shape for another use.

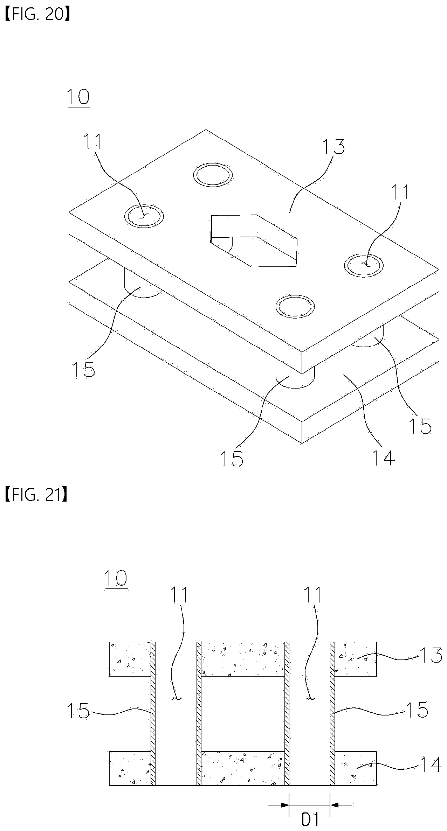

The vertical hole 11 may be a hole formed in the concrete block 10 as illustrated in FIG. 1, or an interior space of a hollow pipe to be inserted into the concrete block 10 as illustrated in FIGS. 20 and 21.

For easy understanding, the size of the vertical hole 11 of the concrete block 10 is exaggerated in FIG. 1 and other drawings.

### (2) Formation of Concrete Block Assembly

A concrete block assembly 100 is formed by continuously arranging the plurality of concrete blocks 10 fabricated in the concrete block fabrication step on the underwater ground 20 as illustrated in FIGS. 2 and 3.

FIG. 2 is a plan view of the concrete block assembly, and FIG. 3 is a cross-sectional view of the concrete block assembly.

The vertical hole 11 of the concrete block 10 constituting the concrete block assembly 100 is formed into a concrete hole 101 for a concrete column, such as a blind hole, in which an upper portion thereof is opened and a lower portion thereof is blocked by the underwater ground 20.

That is, in this embodiment, the concrete blocks are fabricated in large size and arranged in a single row in the vertical direction, and the respective vertical holes 11 serve as an concrete hole 101 for a concrete column.

Thus, the concrete hole 101 for a concrete column extends in the vertical direction with a first diameter D1.

Although the underwater ground 20 is an underwater ground, such as the sea bed, that is not artificially formed, according to embodiments, the underwater ground 20 may conceptually involve the foundation ground that is artificially formed for an underwater concrete block structure.

If the foundation ground is required to be formed on the underwater ground 20, prior to the formation of the concrete block assembly 100, a formation step for forming the foundation ground is further needed.

The foundation ground may be any of foundation ripraps, substituted ripraps, deep mixed ground, improved soft ground, and a combination thereof.

Improved soft ground is the ground that is improved by a soft ground improvement method such as a substitution method, a consolidation method, a dehydration method, a drainage method, a vibration compaction method, a compacted sand pile method, a blasting method, a chemical injection method, etc.

The concrete block assembly 100 illustrated in FIG. 3 is a concrete block assembly in which the plurality of concrete blocks 10 are continuously arranged in the horizontal direction as illustrated in FIG. 2.

### (3) Formation of Drilled Borehole

After the concrete block assembly is formed, as illustrated in FIG. 4, a drilled borehole 102 is formed in line with the concrete hole 101 for a concrete column by drilling the underwater ground 20 under the concrete hole 101 for a concrete column.

In this embodiment, a protection pipe 30, which extends in the vertical direction with a second diameter D2, is vertically inserted into the underwater ground 20 through the concrete hole 101 for a concrete column while forming the drilled borehole 102 by drilling the underwater ground 20 under the concrete hole 101 for a concrete column.

The protection pipe (30), which extends in the vertical direction with the second diameter (D2), is vertically inserted into the underwater ground (20) through the concrete hole (101) for a concrete column while drilling the underwater ground (20) under the concrete hole (101) for a concrete column.

When the drilled borehole 102 is formed in this way, the inserted protection pipe 30 is positioned over the concrete hole 101 and the drilled borehole so that the drilled borehole 102 is formed inside the protection pipe 30.

Here, the protection pipe 30 serves to prevent the surrounding underwater ground 20 from being collapsed into the drilled borehole 102 or the various foreign substances from being introduced into the drilled borehole 102 during or after the drilling operation.

In addition, the protection pipe 30 also serves to protect a waterproof membrane 112 when a vertical reinforcing member 111 and the waterproof membrane 112 are inserted into the protection pipe 30.

The length of the protection pipe 30 is preferably formed longer than the sum of the length of the concrete hole 101 for a concrete column and the length of the drilled borehole 102. As a result, the operation of inserting the waterproof membrane 112 can be easily performed.

That is, as illustrated in FIG. 4, the upper surface of the concrete block assembly 100 is positioned above the water surface and the upper end of the protection pipe 30 inserted during the formation of the drilled borehole is positioned above the upper surface of the concrete block assembly 100 so that the upper end of the protection pipe 30 is located above the water surface. Thus, the operation of inserting the waterproof membrane 112 or the like into the protection pipe 30 may be easily performed.

In addition, the protection pipe 30 is a hollow pipe, a second diameter D2 of which is smaller than the first diameter D1 of the concrete hole 101 for a concrete column. This facilitates the insertion of the protection pipe 30 into the concrete hole. That is, when inserted or removed, the protection pipe 30 is prevented from being caught in the concrete hole 101 for a concrete column.

In addition, since the protection pipe 30 is inserted while being guided along the concrete hole 101, the protection pipe 30 may be inserted with a relatively precise verticality.

Meanwhile, the protection pipe 30 is preferably removed after the drilled borehole 102 is formed.

On the other hand, the drilling equipment is required for drilling the underwater ground 20. In the present embodiment, since the upper surface of the concrete block assembly 100 is located above the water surface, the drilling equipment placed on the concrete block assembly 100 can perform the drilling operation as if the drilling operation is performed on the land (namely, "dry operation"), thereby increasing the operation efficiency compared to the "wet operation" (which is performed on barges).

### (4) Formation of Concrete column

After the formation of the drilled borehole, a concrete column 110 is formed along the concrete hole 101 and the drilled borehole 102.

In the present embodiment, the formation of the concrete column is performed in steps as illustrated in FIGS. 5 to 8.

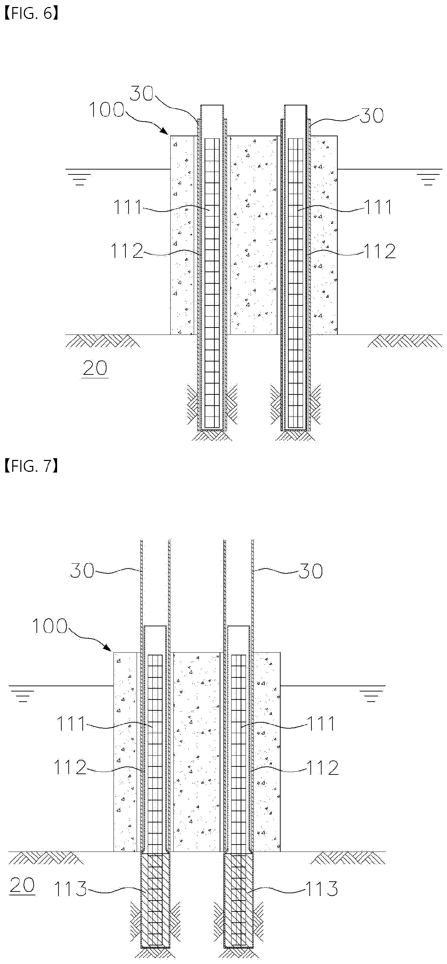

First, as illustrated in FIGS. 5 and 6, a vertical reinforcing member 111 is inserted into the concrete hole 101 and the drilled borehole 102.

In the present embodiment, the protection pipe 30 is already positioned in the concrete hole 101 and the drilled borehole 102, and the vertical reinforcing member 111 is inserted into the protection pipe 30.

The vertical reinforcing member and the waterproof membrane are inserted into the concrete hole 101 and the drilled borehole 102 while the lower and lateral sides of the vertical reinforcing member 111 are wrapped with the waterproof membrane 112.

Since the waterproof membrane 112 is inserted through the protection pipe 30, there is no risk that the waterproof membrane 112 directly contacts the underwater ground 20 or the like so that the waterproof membrane is torn or damaged by the same.

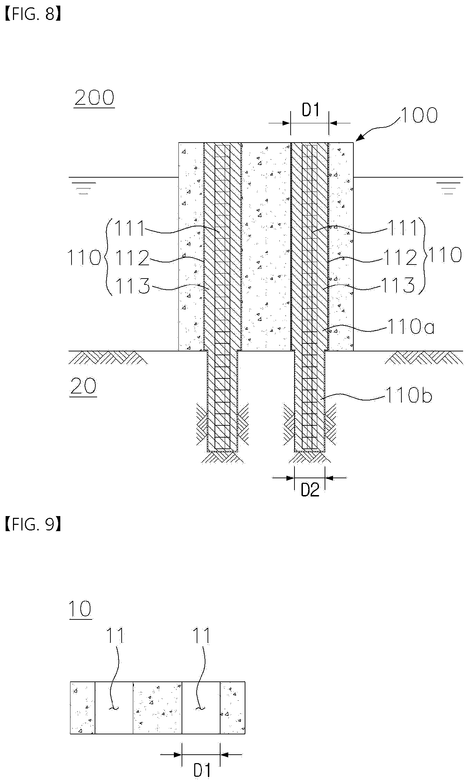

After the vertical reinforcing member 111 wrapped with the waterproof membrane 112 is inserted into the protection pipe 30, as illustrated in FIGS. 7 and 8, fresh concrete 113 is poured into the waterproof membrane 112 to form a concrete column 110.

FIG. 7 is a view illustrating the state in which the protection pipe 30 is slightly raised while pouring a small amount of fresh concrete 113 inside the waterproof membrane 112.

That is, in FIG. 7, the protection pipe 30 is raised such that the lower end thereof is located just above the drilled borehole 102, and the fresh concrete 113 is filled in the waterproof membrane 112 left in the drilled borehole 102.

As a result, the portion of the waterproof membrane 112 disposed in the drilled borehole 102 is in close contact with the underwater ground 20 due to the pressure of the fresh concrete 113 filled in the portion of the waterproof membrane.

In this manner, the protection pipe 30 is gradually raised while gradually pouring fresh concrete 113 into the waterproof membrane 112. Finally, as illustrated in FIG. 8, when the protection pipe 30 is completely removed from the concrete hole 101, the pouring of the fresh concrete 113 through the concrete hole 101 and the drilled borehole 102 is finished.

That is, the protection pipe 30 may be removed before the poured fresh concrete 113 is cured.

As such, when the fresh concrete 113 is poured into the waterproof membrane 112, the waterproof membrane 112 is in close contact with the concrete block 10 and the underwater ground 20 under the pressure of the fresh concrete 113, and then the fresh concrete is cured to form a concrete column 110.

If the fresh concrete 113 is completely poured into the waterproof membrane 112 at once, and then the protection pipe 30 is raised and removed, it may be difficult to remove the protection pipe 30 from the waterproof membrane 112 since the waterproof membrane is in close contact to the inner surface of the protection pipe 30 due to the pressure of the fresh concrete 113.

As such, the concrete column 110 is formed in the concrete block assembly 100 to form an underwater concrete block structure 200.

That is, the concrete column 110 consists of a first column part 110a vertically extending with a first diameter through the concrete hole 101, and a second column part 110b vertically extending with a second diameter through the drilled borehole 102.

The role of the concrete column 110 in the underwater concrete block structure 200 will now be described.

In the meantime, the plurality of concrete blocks 10 constituting the concrete block assembly 100 is bound to the underwater ground 20 by the concrete columns 110.

Therefore, in order to evaluate the stability of the underwater concrete block structure 200 of the present embodiment, in addition to the weight of the underwater concrete block structure 200 and the frictional force of the underwater concrete block structure against the underwater ground 20, the binding force of the underwater concrete block structure to the underwater ground 20 by the concrete columns 110 needs to be considered.

That is, the underwater concrete block structure 200 is significantly improved in stability due to the binding force to the underwater ground 20 by the concrete columns 110.

As a result of the improved stability, if it is sufficient to have the same stability as the conventional big caisson, it is possible to significantly miniaturize the underwater concrete block structure 200.

That is, even when the weight of the underwater concrete block structure 200 and the frictional force of the underwater concrete block structure 200 against the underwater ground 20 are reduced, the binding force to the underwater ground 20 by the concrete columns 110 can compensate for the reduction, thereby providing sufficient stability.

A second embodiment of the present invention will be described below.

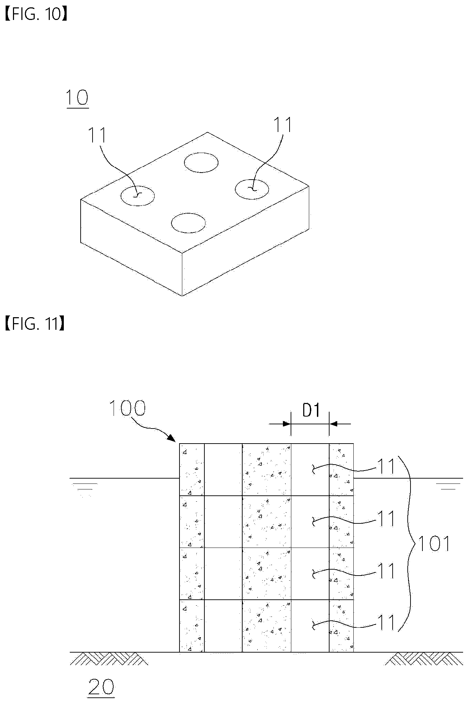

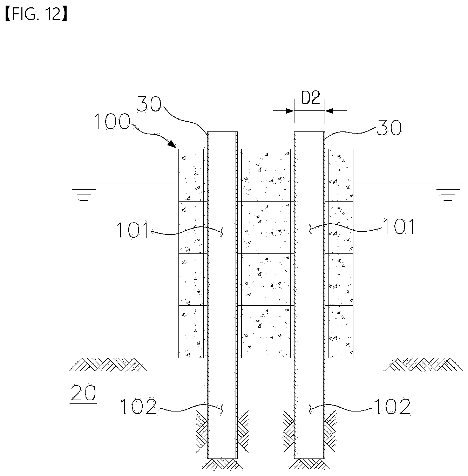

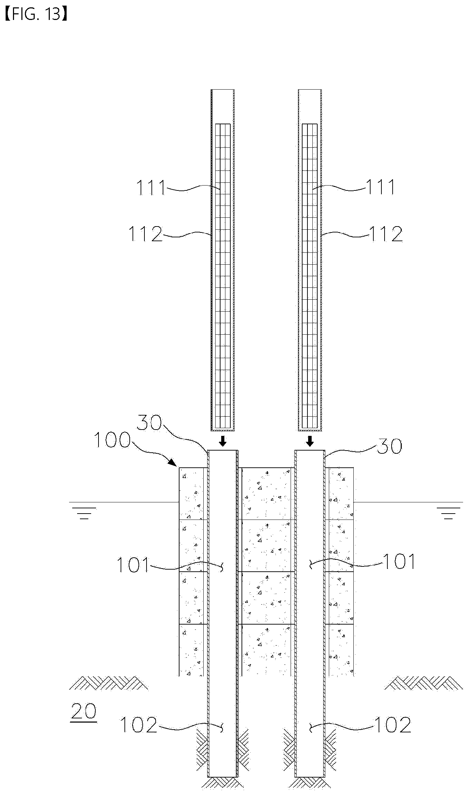

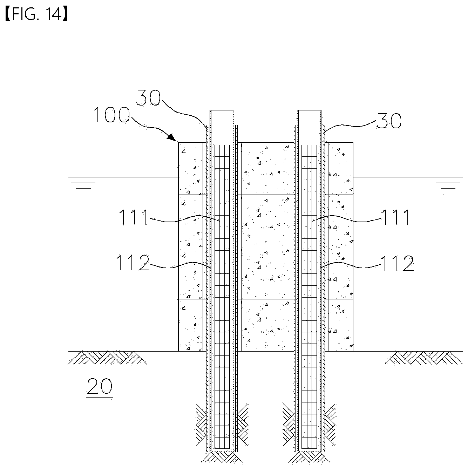

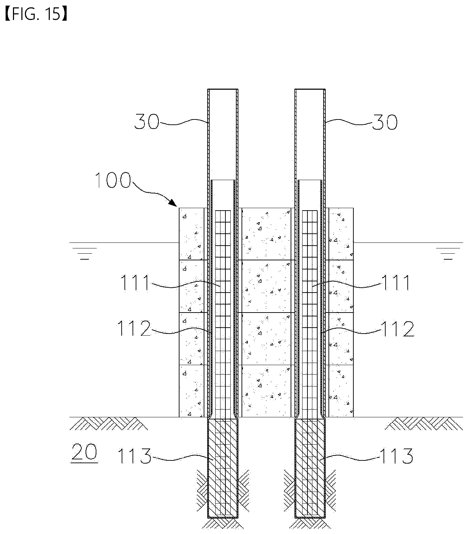

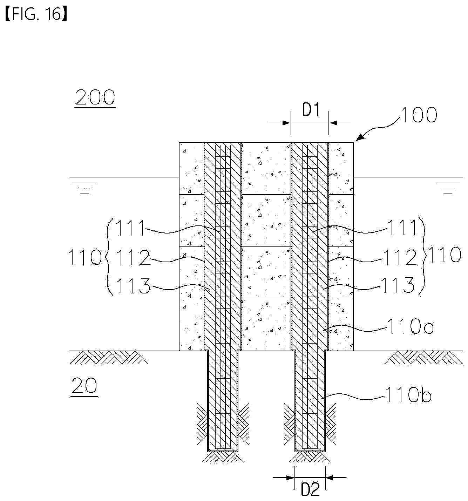

FIG. 9 is a cross-sectional view illustrating the concrete block used in the construction method of the underwater concrete block structure according to a second embodiment of the present invention, FIG. 10 is a perspective view illustrating the concrete block of FIG. 9, FIG. 11 is a view illustrating a state in which a concrete block assembly is formed on the underwater ground by installing the concrete blocks of FIG. 9, FIG. 12 is a view illustrating a state in which a drilled borehole is formed after the concrete block assembly of FIG. 11 is formed, and FIGS. 13 to 16 are views illustrating a procedure of sequentially forming a concrete column after the formation of the drilled borehole illustrated in FIG. 12.

Hereinafter, only a difference from the first embodiment will be mainly described, and a description with respect to the identical part to the first embodiment will be omitted.

### (1) Fabrication of Concrete Block

In this embodiment, a relatively small concrete block 10 as illustrated in FIGS. 9 and 10 is fabricated.

### (2) Formation of Concrete Block Assembly

A concrete block assembly 100 is formed by continuously arranging the plurality of the concrete blocks 10, which are fabricated in the concrete block fabrication step, on the underwater ground 20 in the vertical and horizontal directions as illustrated in FIG. 11.

Although FIG. 11 illustrates the concrete blocks 10 of the concrete block assembly that are continuously stacked in the vertical direction, the concrete blocks 10 are also continuously arranged in the horizontal direction. Since the continuous horizontal arrangement of the plurality of concrete blocks 10 is known in the art, a detailed description thereof will be omitted.

In the concrete block assembly 100, the vertical holes 11 of the concrete blocks 10 continuously stacked in the vertical direction are continuously connected together in the vertical direction, thereby forming a concrete hole 110 for a concrete column, like a blind hole, in which the upper end thereof is opened while the lower end thereof is blocked by the underwater ground 20.

That is, in the present embodiment, the concrete blocks 10 are installed in two or more stages in the vertical direction, and the vertical holes 11 of the concrete blocks 10 stacked in the vertical direction are combined to form the single concrete hole 101 for a concrete column.

Subsequently, (3) Formation of Drilled Borehole and (4) Formation of Concrete column are sequentially performed.

The role of the concrete column 110 in the underwater concrete block structure 200 will be described below.

In comparison with the first embodiment, the present embodiment has the effect that the concrete blocks 10 that are continuously arranged in the vertical and horizontal directions are bound together while being bound to the underwater ground 20 by the concrete columns 110, thereby providing the concrete block assembly 100 with structural integrity.

Hereinafter, a construction method of an underwater concrete block structure will be described according to a third embodiment of the present invention.

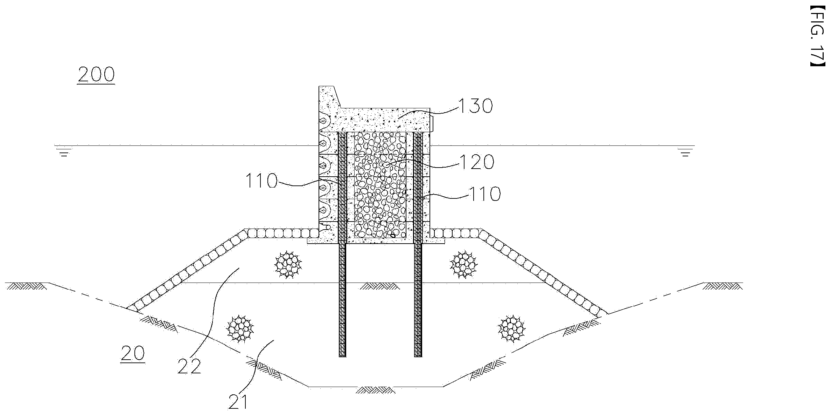

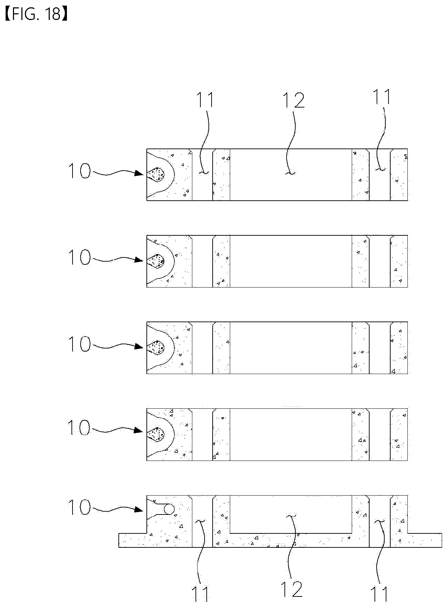

FIG. 17 is a cross-sectional view illustrating an underwater concrete block structure constructed according to the third embodiment of the present invention, and FIG. 18 is an exploded view illustrating a plurality of concrete blocks used in constructing the underwater concrete block structure of FIG. 17.

In FIG. 17, after a part of the underwater ground 20 is excavated, a substituted riprap ground 21 is formed as a foundation ground, a foundation riprap ground 22 is formed on the upper portion of the substituted riprap ground 21, and an underwater concrete block structure 200 is constructed on the foundation riprap ground 22.

In other words, the foundation ground formation step is performed before the concrete block assembly is formed.

In addition, in FIG. 17, after the concrete block assembly 100 and the concrete columns 110 are formed, a filling step and a cap concrete part forming step are further added.

That is, as illustrated in FIG. 18, filling spaces 12 are respectively formed inside the concrete blocks 10.

The filling spaces 12 of the concrete blocks 10 are filled with a filling material 120 (sand, gravel, sandstone, etc.) after the concrete block assembly 100 is formed.

In addition, after the concrete columns 110 are formed, a cap concrete part 130 is formed on the concrete block assembly 100.

In other words, after the concrete column forming step, the cap concrete part forming step may be further added.

Hereinafter, a construction method of an underwater concrete block structure will be described according to a fourth embodiment of the present invention.

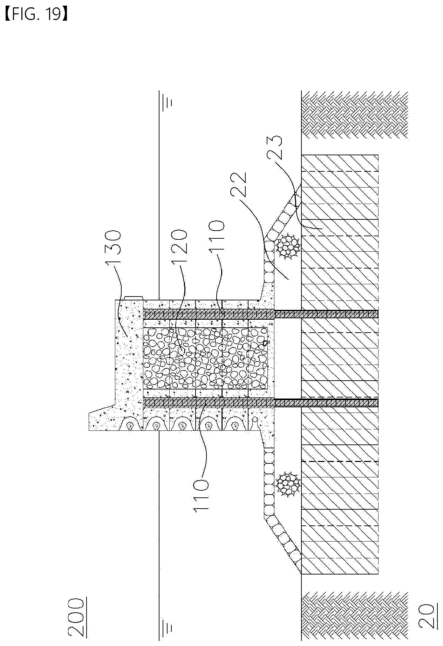

FIG. 19 is a cross-sectional view illustrating an underwater concrete block structure constructed according to the fourth embodiment of the present invention.

In Fig. 19, after a part of the underwater ground 20 is consolidated into a deep mixed consolidation ground 23 by a deep mixed consolidation ground method, a foundation riprap ground 22 is formed on the deep mixed consolidation ground 23, and an underwater concrete block structure 200 is constructed on the foundation riprap ground 22.

In the present embodiment, the deep mixed consolidation ground 23 and the foundation riprap ground 22 are formed in combination as the foundation ground.

In other words, the foundation ground formation step is performed before the concrete block assembly is formed.

In addition, in FIG. 19, after the concrete block assembly 100 and the concrete columns 110 are formed, a filling step and a cap concrete part forming step are further added.

That is, after the concrete block assembly 100 is formed, a filling material 120 (sand, gravel or sandstone, etc.) is filled, and a cap concrete part 130 is formed on the concrete block assembly 100.

Hereinafter, a construction method of an underwater concrete block structure will be described according to a fifth embodiment of the present invention.

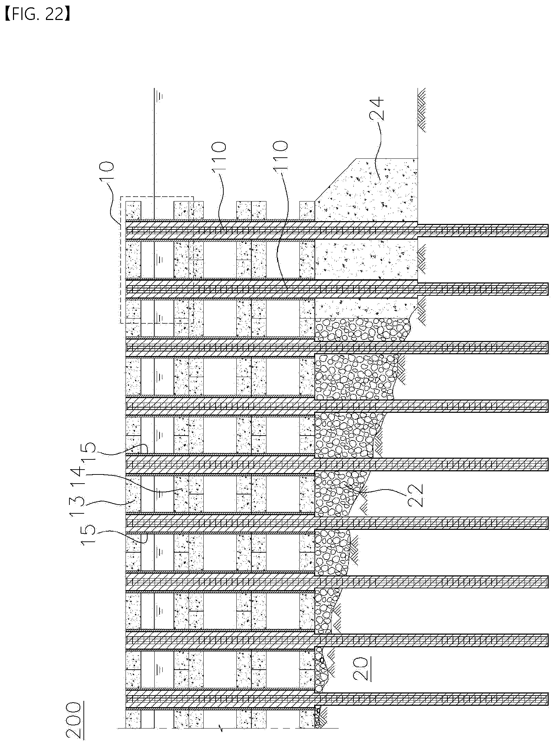

FIG. 20 is a perspective view illustrating a concrete block used in a construction method of an underwater concrete block structure according to the fifth embodiment of the present invention, FIG. 21 is a cross-sectional view illustrating the concrete block of FIG. 21, and FIG. 22 is a cross-sectional view illustrating the underwater concrete block structure constructed according to the fifth embodiment of the present invention.

As illustrated in FIGS. 20 and 21, the concrete block 10 includes an upper concrete plate 13, a lower concrete plate 14, and a vertical connection pipe 15 connecting the upper and lower concrete plates 13 and 14.

The upper and lower concrete plates 13 and 14 are spaced apart from each other in the vertical direction so that seawater may flow therebetween.

In an embodiment, other components may be added between the upper and lower concrete plates 13 and 14.

Upper and lower parts of the vertical connection pipe 15 are respectively connected to the upper and lower concrete plates 13 and 14 so that a middle part of the vertical connection pipe is exposed to the outside between the upper and lower concrete plates 13 and 14.

In addition, the vertical connection pipe 15 is a hollow pipe having a vertical hole 11 therein.

As illustrated in FIG. 22, the underwater concrete block structure 200 is formed by using the concrete blocks 10.

In FIG. 22, a concrete column 110 is formed along a concrete hole, which is formed by the continuous connection of the vertical holes 11 of the vertical connection pipes 15 that are continuously connected in the vertical direction, and a drilled borehole in the underwater ground.

In FIG. 22, after the foundation riprap ground 22 is formed in advance on the underwater ground 20, the underwater concrete block structure 200 is constructed on the foundation riprap ground 22.

In addition, on one side of the foundation riprap ground 22, a support concrete block 24 having vertical holes is placed.

The support concrete block 24 may be a modified form of FIG. 9.

As described above, the foundation ground is formed before the concrete block assembly is formed.

In such an underwater concrete block structure 200 of the present embodiment, an environment in which seawater can flow freely in the underwater concrete block structure is provided.

That is, the seawater can flow freely around the vertical connection pipes 15, and the concrete columns are internally formed through the vertical connection pipes 15 so that the concrete blocks can be bound together.

In this embodiment, the shape of the concrete block may be modified in various ways.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments described above are to be understood in all respects as illustrative and not restrictive. For example, each component described as a single type may be implemented in a distributed manner, and similarly, components described as distributed may be implemented in a combined form.

The scope of the present invention is defined by the following claims rather than the above description, and all changes or modifications derived from the meaning and scope of the claims and their equivalents should be construed as being included in the scope of the present invention.

### Industrial Applicability

The present invention may be used to construct an underwater concrete block structure installed at sea or in a river for various purposes such as docks for a port, coastal wave absorbing revetment or breakwater, etc.

## Claims

1. A method of constructing an underwater concrete block structure, the method comprising:
fabricating a plurality of concrete blocks each having a vertical hole extending in a vertical direction;
continuously arranging the plurality of concrete blocks on the underwater ground in a horizontal direction to form a concrete block assembly, whereby the vertical hole of the concrete block is formed into a concrete hole in which an upper end thereof is opened while a lower end thereof is blocked by the underwater ground;
after the concrete block assembly is formed, drilling the underwater ground under the concrete hole to form a drilled borehole in line with the concrete hole; and
after the drilled borehole is formed, forming a concrete column through the concrete hole and the drilled borehole,
wherein an upper surface of the concrete block assembly is located above the water surface, so that the drilled borehole is formed in a dry operation by a drilling equipment placed on the upper surface of the concrete block assembly.

2. The method according to claim 1, wherein the concrete column is formed by inserting a vertical reinforcing member extending in a vertical direction and a waterproof membrane wrapping lower and lateral sides of the vertical reinforcing member into the concrete hole and the drilled borehole, and pouring fresh concrete into the waterproof membrane.

3. The method according to claim 1, wherein a protection pipe, extending in a vertical direction, is inserted into the underwater ground through the concrete hole while drilling the underwater ground to form the drilled borehole, wherein after the protection pipe is inserted, the protection pipe is positioned over the concrete hole and the drilled borehole such that the drilled borehole is formed inside of the protection pipe.

4. The method according to claim 3, wherein the concrete column is formed by inserting a vertical reinforcing member extending in a vertical direction and a waterproof membrane wrapping lower and lateral sides of the vertical reinforcing member into the protection pipe, pouring fresh concrete into the waterproof membrane, and removing the protection pipe before the poured fresh concrete is cured so that the waterproof membrane is in close contact with the concrete block assembly and the underwater ground under the pressure of the poured fresh concrete.

5. The method according to claim 3, wherein the protection pipe is removed after the drilled borehole is formed.

6. The method according to claim 1, wherein the concrete block assembly is formed by continuously arranging the plurality of concrete blocks in vertical and horizontal directions, whereby the vertical holes of the concrete blocks continuously stacked in the vertical direction are continuously connected in a vertical direction to form the concrete hole in which the upper end thereof is opened while the lower end thereof is blocked by the underwater ground.

7. The method according to any one of claim 1 to 6, wherein the underwater ground includes an artificially formed foundation ground, wherein the foundation ground is formed before the concrete block assembly is formed, wherein the foundation ground is any of foundation ripraps, substituted ripraps, deep mixed consolidation ground, improved soft ground, and a combination thereof.

8. The method according to any one of claim 1 to 6, wherein after the concrete column is formed, a cap concrete part is further formed on the concrete block assembly.

9. The method according to any one of claim 1 to 6, wherein the concrete block has a filling space therein, wherein after the concrete block assembly is formed, a filling material is further filled in the filling space.

10. The method according to any one of claim 1 to 6, wherein the concrete block includes an upper concrete plate, a lower concrete plate spaced apart from the upper concrete plate, and a vertical connection pipe connecting the upper and lower concrete plates, wherein upper and lower parts of the vertical connection pipe are respectively connected to the upper and lower concrete plates so that a middle part of the vertical connection pipe is exposed to the outside between the upper and lower concrete plates.
